## Europäisches Patentamt

## European Patent Office

## Office européen des brevets

(19)

(11) Veröffentlichungsnummer: **0 165 418**
**B1**

(12) **EUROPÄISCHE PATENTSCHRIFT**

(45) Veröffentlichungstag der Patentschrift:
**13.07.88**

(21) Anmeldenummer: **85105400.7**

(22) Anmeldetag: **03.05.85**

(51) Int. Cl.⁴: **H 05 B 7/085**, H 05 B 7/14

(54) **Graphitelektrode für Lichtbogenöfen und Verfahren zu ihrer Herstellung.**

(30) Priorität: **22.05.84 DE 3418934**

(43) Veröffentlichungstag der Anmeldung:
**27.12.85 Patentblatt 85/52**

(45) Bekanntmachung des Hinweises auf die Patenterteilung:
**13.07.88 Patentblatt 88/28**

(84) Benannte Vertragsstaaten:
**BE CH DE FR GB IT LI SE**

(56) Entgegenhaltungen:
**EP - A - 0 022 921**
**EP - A - 0 092 649**
**FR - A - 445 390**
**FR - A - 1 255 781**
**FR - A - 2 324 189**

(73) Patentinhaber: **SIGRI GmbH,**
**Werner-von-Siemens-Strasse 18, D-8901 Meitingen (DE)**

(72) Erfinder: **Böder, Horst, Dipl.-Chem. Dr.rer.nat.,**
**Ludwig-Thoma-Strasse 5, D-8901 Biberbach (DE)**

## Beschreibung

Die Erfindung betrifft eine Graphitelektrode für Lichtbogenöfen mit mehreren durch Schraubnippel verbundene Elektrodenabschnitten.

In Lichtbogenöfen und Lichtbogenreduktionsöfen verwendete Graphitelektroden – unter diesem Begriff werden im folgenden auch vorwiegend aus Kohlenstoff bestehende Elektroden verstanden, die einer Graphitierungsbehandlung nicht unterworfen wurden – setzen sich in der Regel aus mehreren miteinander verbundenen Elektrodenabschnitten zusammen. Verbindungsmittel ist überwiegend ein konischer, doppelkonischer oder auch zylindrischer Gewindenippel aus dem gleichen Werkstoff, der in schachtelförmige, von den Stirnflächen der Elektrodenabschnitte ausgehende mit Gewinde versehene Ausnehmungen geschraubt ist. Da der Querschnitt des Nippels nur einen Teil des Elektrodenquerschnitts ausmacht, ist es allgemein nötig, die Festigkeit des Nippels über die der anliegenden Elektrodenabschnitte zu erhöhen. Man verwendet zu diesem Zweck für die Herstellung des Nippels nur ausgesuchte Rohstoffe und vermindert das zugängliche Porenvolumen durch Imprägnierungen mit Pechen oder anderen Imprägniermitteln. Eine nachteilige Folge dieses Verfahrens ist der Anstieg des radialen thermischen Ausdehnungskoeffizienten und des Elastizitätsmoduls und damit eine merkliche Verringerung der Beständigkeit gegen schnelle Temperaturänderungen. Wie die Gesamtelektrode sind die Schraubverbindungen zwischen den Elektrodenabschnitten beim Betrieb der Elektrode in Lichtbogenöfen, vorzugsweise zur Erzeugung von Stahl, grossen Temperaturschwankungen und Temperaturgradienten unterworfen. Bei der üblichen schnellen Erhitzung entstehen bedingt durch radiale Temperaturdifferenzen und dem stofflichen Unterschied zwischen Nippel und Elektrodenabschnitt in der Schachtelwand Tangentialspannungen und beim Abkühlen der Elektrode, z.B. zum Annippeln eines neuen Elektrodenabschnitts, durch Aufschrumpfen der Schachtel auf den Nippel Zugspannungen, die beide den Bruch der Schachtelwand bewirken können. Ein anderer verbreiteter Fehler ist der Bruch des Nippels selbst, bei doppelkonischen Nippeln vorzugsweise in der Äquatorebene. Ursachen des Bruchs sind Zugspannungen, die durch unterschiedliche thermische Ausdehnungskoeffizienten von Nippel und Elektrodenabschnitt in longitudinaler Richtung entstehen. Da Elektrodenbrüche den Elektrodenverbrauch erhöhen und vor allem zu Unterbrechungen des Ofenbetriebs führen, ist wiederholt versucht worden, den Spannungsaufbau innerhalb der Elektrode und die Bruchrate durch strukturelle und stoffliche Änderungen der Elektrodenteile und der Verbindungen zwischen den Teilen zu verkleinern. Vorgeschlagen wurde beispielsweise, die durch schroffe Temperaturänderungen bedingten Radial- und Tangentialspannungen durch Schlitze oder Kerben zu begrenzen, die in Elektrodenabschnitte und Schraubnippel eingebracht werden und im wesentlichen parallel zu deren Längsachse verlaufen (US-PS 2 527 294, 2 603 669). Nach anderen Vorschlägen sollen Spannungskonzentrationen durch besonders ausgebildete Gewinde verhindert werden, z.B. durch ein Schraubgewinde mit einer sich stetig ändernden Gewindetiefe (DE-PS 25 55 688). Nachteile der Lösungen sind die Abweichung vom Normgewinde und die Verringerung der statischen Bruchlast des Elektrodenstrangs. Zur Lösung des Bruchproblems wurde auch vorgeschlagen, die Festigkeit von Elektrodenabschnitten und Nippeln wesentlich zu erhöhen, vor allem durch das Einarbeiten von Kohlenstoffasern in das üblicherweise aus klassiertem Petrolkoks und einem Pechbinder bestehenden Masse zur Herstellung dieser Produkte (DE-OS 26 59 374). Kohlenstoffasern werden wegen ihrer grossen Festigkeit und Steifigkeit vor allem zur Verstärkung von Kunstharzen, aber auch von metallischen und keramischen Werkstoffen verwendet. In die bei der Herstellung von Elektrodenabschnitten und Nippeln verwendeten Massen ist es jedoch ausserordentlich schwierig, die in einer Menge von etwa ein Prozent zugegebenen Kohlenstoffasern gleichmässig zu verteilen und da zudem ein grösserer Teil der vergleichsweise spröden Fasern bei dieser Behandlung zerbricht, ist der erzielte Effekt nur klein, d.h., die Bruchrate von Elektrodenabschnitten wird nur unwesentlich verringert.

Der Erfindung liegt die Aufgabe zugrunde, die Festigkeit der aus mehreren Elektrodenabschnitten gebildeten Graphitelektrode und besonders die Festigkeit der Verbindungen zwischen den Abschnitten zu erhöhen und den Bruch der Elektrode zu verhindern oder wenigstens die Bruchhäufigkeit wesentlich zu verringern.

Die Aufgabe wird mit einer Graphitelektrode der eingangs genannten Art dadurch gelöst, dass wenigstens ein Teil der Elektrode von mindestens einer Schar Graphitfilamentgarn umspannt und das Garn kraftschlüssig mit dem Elektrodenteil verbunden ist.

Unter dem Begriff «Graphitfilamentgarn» werden im wesentlichen aus Kohlenstoff bestehende, durch Pyrolyse von Pechfasern, Polyacrylnitrilfasern oder anderen carbonisierbaren Filamenten hergestellte Garne verstanden, die einer thermischen Behandlung im Temperaturbereich von etwa 1000 bis 2500 °C unterzogen wurden. Die Garne sind temperaturbeständig, ihre Reissfestigkeit beträgt etwa 0,2 GPa und mehr. Zweckmässig werden Multifilamentgarne mit einem Titer von etwa 10 bis 400 ktex verwendet, vorzugsweise wegen der kostengünstigen Verarbeitung Multifilamentgarne mit einem Titer von 300 bis 350 ktex. Die Verwendung von Graphitfasern zur Verstärkung von Elementen mit einer Kunstharzmatrix, z.B. Platten, Rohre, Zylindern u.dgl., ist bekannt und auch die Verstärkung von Kohlenstoffkörpern mit einer durch Carbonisieren von Kunstharzen oder Pechen gebildeten Matrix. Die zur Verstärkung derartiger Elemente verwendeten Verfahren eignen sich jedoch aus den oben genannten Gründen nicht für die Herstellung faserverstärkter Elektrodenabschnitte und Schraubnippel aus Graphit. Der Verstärkungseffekt der Graphitfasern kann aber nach den der Erfindung zugrundeliegenden Lehre auch dann erzielt werden, wenn die Verstärkungsfasern nicht mehr oder weniger gleichförmig über das Volumen der Elektrode verteilt sind, sondern in Form von Filamentgarn die Teile der Graphitelektrode wenigstens teilweise umspannen. Nach einer bevorzugten Ausführung der Erfindung sind die Schraubnippel und die Elektrodenabschnitte der Elektrode von Graphitfilamentgarn umspannt. Dabei ist in bekannter Weise die Verstärkung durch die Garnmenge und die Richtung der Scharen der tatsächlichen Belastung der einzelnen Elektrodenteile angepasst. Besonders günstig ist die Anordnung des Garns in zwei Scharen, einer im wesentlichen parallel zur Längsachse und einer mehr oder weniger tangential verlaufenden Schar, die etwa mit den Hauptbeanspruchungsrichtungen zusammenfallen. Bevorzugt wird die Vorspannung des Garns, das durch Klebverbindungen oder Zuganker auf den Elektrodenteilen fixiert ist. Nach einer anderen bevorzugten Ausführung der Erfindung sind mit spannungsentlastenden Schlitzen versehene Elektrodenabschnitte und Schraubnippel von dem verstärkenden Filamentgarn umspannt. Die für eine Spannungsentlastung vorgesehenen Schlitze und Kerben dienen bei dieser Lösung zweckmässig als Führung des Garns. Nach einer anderen Ausführungsform dienen die Gewindegänge des Schraubnippels selbst als Führung des verstärkenden Filamentgarns. Die Gewindegänge sind zur Aufnahme des Garns entsprechend vertieft. Auf die Mantelfläche der Elektrodenabschnitte aufgespannte Garne sind beim Betrieb der Elektrode dem Angriff von Luftsauerstoff und anderen die Garne allmählich zerstörenden Stoffe ausgesetzt. Vorteilhaft ist daher das Garn mit einem Überzug aus oxidationsbeständigen und temperaturfesten Stoffen versehen, wobei der Überzug sich über die gesamte Mantelfläche erstrecken sollte. Derartige feuerfeste Überzüge auf Graphitelektroden zur Verminderung des Mantelabbrands sind an sich bekannt. Im allgemeinen reicht aber die Haftfestigkeit der Überzüge nicht aus und es ist deshalb bereits vorgeschlagen worden, den Überzugsschichten zur Verbesserung der Haftfestigkeit und zur Senkung der Risshäufigkeit Fasern als Kurzschnittfasern oder in Form netzartiger Gewebe zuzusetzen (DE-OS 27 22 438). Die Fasereinlagerungen sind nicht geeignet, eine Vorspannung in den Teilen der Graphitelektrode zu erzeugen. Andererseits dient bei der erfindungsgemässen Lösung die Garnumspannung auch als Träger oder Haftgrund für refraktäre Überzüge und verbessert damit die Wirksamkeit der Mantelbeschichtung. Zur Anpassung an die tatsächliche Belastung der Elektrodenteile ist dabei beispielsweise der Nippel durch Umwickeln mit Filamentgarn vorgespannt und die anliegende Wand der Elektrodenschachtel zur Spannungsentlastung geschlitzt oder nach einer anderen Ausführungsform sind die Kerne der Elektrodenabschnitte vorgespannt und eine ringförmige, den Kern umschliessende Zone des Abschnittes mit Schlitzen versehen, die von der Mantelfläche ausgehen. Die Kombination einer Vorspannung durch die kraftschlüssige Umschlingung der Elektrodenteile mit Filamentgarn und einer Spannungsentlastung durch die Schlitzung der Elektrodenteile ergibt eine besonders wirksame Verringerung der Bruchrate.

Zur Herstellung der erfindungsgemässen Graphitelektrode wird Graphitfilamentgarn bevorzugt unter einer Vorspannung auf den Schraubnippel und/oder die Elektrodenabschnitte aufgezogen. Die Vorspannung beträgt dabei zweckmässig 10 bis 20% der Reissfestigkeit, entsprechend etwa 0,1 bis 0,2 GPa. Das Garn wird in üblicher Weise mit Klemmen, Keilen und anderen Feststellmitteln fixiert und anschliessend zweckmässig mit den Elektrodenteilen verklebt. Nach einer bevorzugten Ausführungsform wird das Garn in die Gewindegänge des Schraubnippels abgelegt.

Nach einem anderen Verfahren werden wenigstens die Schraubnippel mit Kerben versehen, die mit der Längsachse des Nippels jeweils eine gemeinsame Ebene haben und deren Tiefe grösser ist als die Gewindetiefe des Schraubgewindes oder es werden mindestens zwei im wesentlichen in axialer Richtung verlaufende Bohrungen angebracht. Die als Führung der Faserbündel dienenden Kerben und Bohrungen werden in den fertigen Nippel eingearbeitet oder zweckmässig in den Rohnippel, in den das Schraubgewinde nach dem Aufziehen des Garns eingeschnitten wird. Die übliche Imprägnierung des Nippels mit Pech kann dabei zum Verkleben des Garns genutzt werden, so dass ein besonderer Klebeschritt entfällt. Nach einer anderen Ausführung werden auch die Elektrodenabschnitte mit im wesentlichen axialen Bohrungen versehen, vorgespannte Filamentgarne in die Bohrungen eingezogen, mit dem Elektrodenabschnitt verklebt und das Klebemittel thermisch stabilisiert. Geeignete Klebemittel sind fliessende carbonisierbare Stoffe, die möglichst gut haftende Koksschichten bilden, wie Peche und besonders härtbare Harze, z.B. Phenolformaldehydharz. Die Graphitfilamentgarne werden zweckmässig mit dem Klebemittel imprägniert, beispielsweise durch eine Tauchbehandlung in einem Pech- oder Harzbad. Zweckmässig wird die Imprägnierung mit dem Aufziehen oder Wickeln des Garns auf die Elektrodenteile kombiniert, d.h., das abgespulte Garn durchläuft ein Tauchbad, das vor der Wickelvorrichtung angeordnet ist. Das Garn kann auch trocken aufgezogen und das Klebemittel in situ durch Sprühen, Bürsten und dgl. aufgetragen werden. Für die Herstellung einer dauerhaften temperaturbeständigen Verbindung zwischen Elektrodenteilen und verstärkendem Garn ist es nötig, das Klebemittel in eine thermisch beständige Form zu bringen. Die umwickelten Elektrodenteile werden zu diesem Zweck erwärmt, wobei Temperatur und Dauer gegebenenfalls modifiziert durch die Zugabe von Katalysatoren durch die Art des Klebemittels bestimmt sind. Für härtbare Harze beträgt die Temperatur etwa 120 bis 200 °C und die Erhitzungsdauer etwa 2 bis 8 h. Zur endgültigen Verfestigung bedarf es einer weiteren im folgenden als thermische Stabilisierung bezeichnete Wärmebehandlung, bei welcher durch Pyrolyse des Klebemittels Koksbrücken zwischen den verstärkenden Garnen und den Elektrodenteilen gebildet werden. Die für diesen Verfahrensschritt benötigte Temperatur beträgt wenigstens 800 °C. Eine besondere Temperaturbehandlung ist aber in der Regel nicht erforderlich, da das Klebemittel bei der bestimmungsgemässen Verwendung der Elektrode in einem Lichtbogenofen thermisch stabilisiert wird. Es wurde gefunden, dass dabei feste Koksbrücken gebildet werden, die eine wirksame Krafteinteilung ermöglichen. Elektrodenabschnitte, deren Mantelfläche umwickelt ist, werden zweckmässig nach Fixierung des verstärkenden Garns mit einem Überzug aus hochschmelzenden, oxidationsbeständigen Stoffen versehen, die beispielsweise durch Flamm- oder Plasmaspritzen aufgetragen werden. Geeignete Stoffe sind vor allem refraktäre Carbide und Silicide allein oder gemischt mit hochschmelzenden Oxiden und Flussmitteln. Der Überzug sollte wenigstens das aufgezogene Garn vollständig bedecken, so dass Schäden durch Oxidation oder Erosion ausgeschlossen sind.

Zum Umspannen der Schraubnippel und Elektrodenabschnitte mit Graphitfilamentgarnen sind die bekannten Wickelvorrichtungen und -verfahren geeignet. Die Wickelgeschwindigkeit beträgt zweckmässig 10 bis 50 m/s, die Vorspannung etwa 1 bis 2 N/mm². Die zum Umwickeln der Kerne von Nippel und Elektrodenabschnitt vorgesehenen axialen Bohrungen haben einen Durchmesser von etwa 8 bis 12 mm. Das Garn wird eingezogen und die Enden durch Keile oder Klemmen fixiert. Insgesamt beträgt der Anteil des verstärkenden Garns am Gewicht der Elektrodenteile zweckmässig 0,1 bis 1,0%, besonders 0,2 bis 0,5%.

Die Funktionstüchtigkeit der mit Graphitfilamentgarnen umspannten Elektrode wird vor allem durch Zugentlastung wesentlich verbessert. Bei kraftschlüssiger Verbindung von vorgespanntem Garn und Elektrode steigt die Bruchlast um etwa 50 bis 100%. Wird in Verbindung mit der Vorspannung der Elektrode der Aufbau von Spannungsspitzen durch Schlitzung und Kerbung begrenzt, kann die Bruchwahrscheinlichkeit der Elektrode, besonders der Elektrodenverbindung auf weniger als die Hälfte des für übliche Graphitelektroden geltenden Betrags gesenkt werden. Die wesentlich kleinere Bruchrate ermöglicht insbesondere den störungsfreien Betrieb von Lichtbogenöfen, deren Elektroden besonders hohen Belastungen ausgesetzt sind, z.B. UHP-Öfen und Öfen mit wassergekühlten Elektroden.

Die Erfindung wird im folgenden anhand von Zeichnungen beispielhaft erläutert. Es zeigen:

Fig. 1 einen mit Faserbündeln umspannten Nippel,

Fig. 2 den Nippel nach Fig. 1 in der Aufsicht,

Fig. 3 Längsschnitt eines Nippels mit faserumspanntem Kern,

Fig. 4 den Nippel nach Fig. 2 in der Aufsicht,

Fig. 5 Längsschnitt eines Elektrodenabschnitts mit faserumspanntem Kern,

Fig. 6 einen Längsschnitt einer Elektrode.

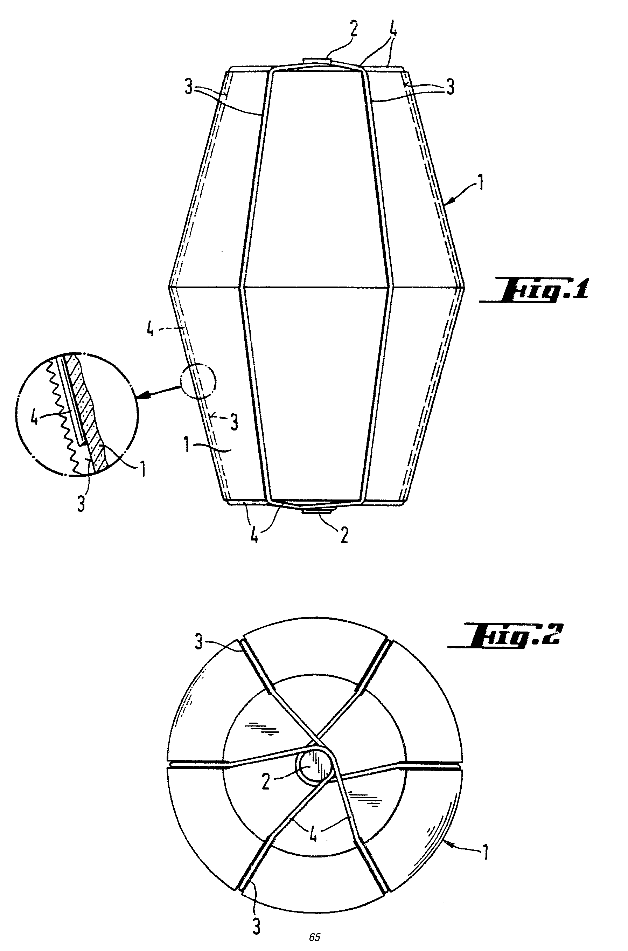

In Fig. 1 und 2 ist schematisch ein doppelkonischer Graphitnippel in Schnitten dargestellt. Der Nippelkörper 1 weist in den Stirnflächen Zapfen 2 auf, und die Konusflächen sind mit nutartigen Kerben 3 versehen, die tiefer sind als die zeichnerisch nur in einer vergrösserten Detailzeichnung dargestellten Gewindegänge. In die Kerben ist das Graphitfilamentgarn 4 eingezogen. Das Garn wird beim Wickeln um die Zapfen 2 umgelenkt.

Ein Graphitnippel mit einem Äquatordurchmesser von 317 mm und einer Länge von 355 mm wurde wie oben beschrieben mit sechs Nuten 4×10 mm versehen, ein harzimprägniertes Graphitmultifilamentkabel – 320 kfil, Zugfestigkeit 3 GPa – mit einer Vorspannung von etwa 0,5 GPa aufgewickelt und das Phenolformaldehydharz durch Erwärmen des Nippels thermisch stabilisiert. Bei einem Faseranteil von 0,35% war die Bruchspannung etwa 70% grösser als die eines nichtverstärkten Nippels.

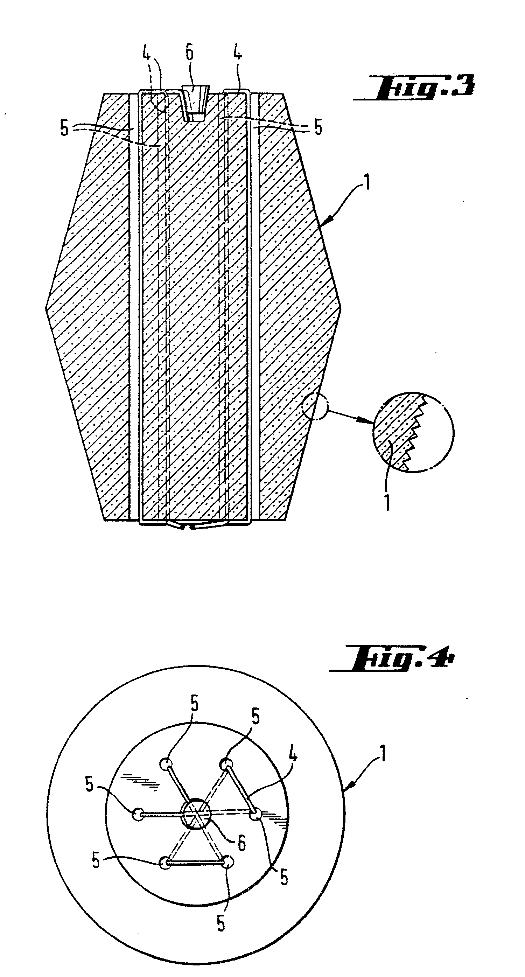

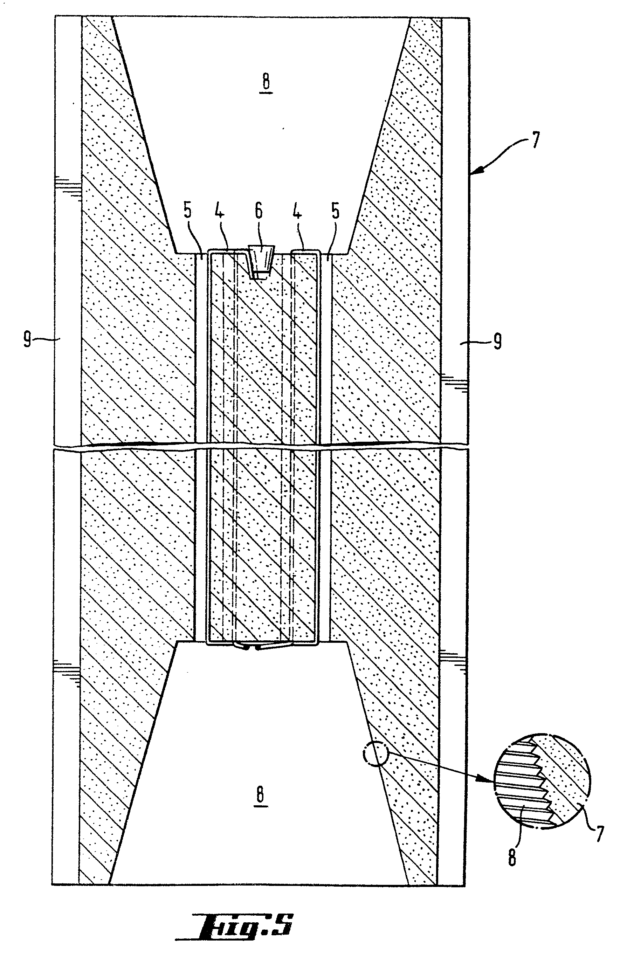

Fig. 3 und 4 zeigen einen anderen Graphitnippel, der mit Bohrungen 5 zur Aufnahme des verstärkenden Graphitfilamentgarns 4 versehen ist, das mit dem Keil 6 fixiert ist.

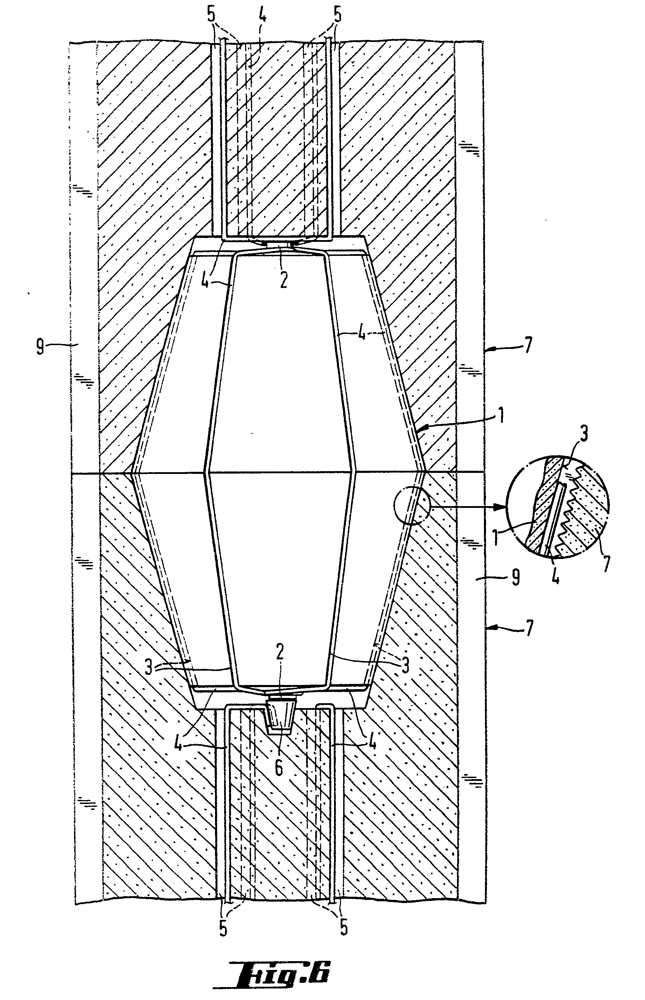

Ein faserverstärkter Elektrodenabschnitt ist schematisch in Fig. 5 dargestellt. Der Elektrodenabschnitt 7 ist mit Bohrungen 5 versehen, die sich parallel zur Längsachse zwischen den Böden der Schachteln 8 erstrecken. Das eingezogene Graphitfilamentgarn 4 ist durch den Keil 6 fixiert. Ein Elektrodenabschnitt mit einem Durchmesser von 600 mm und einer Länge von 2000 mm wurde mit sechs Bohrungen versehen, Graphitfilamentgarn der oben beschriebenen Beschaffenheit eingezogen und das Imprägnierharz thermisch stabilisiert. Bei einem Faseranteil von 0,2% war die Bruchfestigkeit etwa 90% grösser als die des unverstärkten Elektrodenabschnitts.

Fig. 6 zeigt schematisch zwei miteinander durch den Schraubnippel 1 verbundene Graphitelektrodenabschnitte 7, die mit Kerben 3 bzw. Bohrungen 5 zur Aufnahme der vorgespannten Graphitfilamentgarne 4 versehen sind. Die in die Elektrodenabschnitte eingezogenen Schlitze 9 sollen den durch Temperaturänderungen beim Betrieb der Elektrode bedingten Aufbau von Spannungsspitzen begrenzen.

**Patentansprüche**

1. Graphitelektrode für Lichtbogenöfen mit mehreren durch Schraubnippel verbundene Elektrodenabschnitten, dadurch gekennzeichnet, dass wenigstens ein Teil der Elektrode mit Graphitfilamentgarn umspannt ist und das Garn kraftschlüssig mit dem Elektrodenteil verbunden ist.

2. Graphitelektrode nach Patentanspruch 1, dadurch gekennzeichnet, dass Schraubnippel und Elektrodenabschnitte von Graphitfasergarn umspannt sind.

3. Graphitelektrode nach den Patentansprüchen 1 und 2, dadurch gekennzeichnet, dass das Graphitfasergarn vorgespannt ist.

4. Graphitelektrode nach den Patentansprüchen 1 bis 3, dadurch gekennzeichnet, dass das Garn ein Multifilamentgarn ist.

5. Graphitelektrode nach den Patentansprüchen 1 bis 4, dadurch gekennzeichnet, dass der Titer des Garns 300 bis 350 ktex beträgt.

6. Graphitelektrode nach den Patentansprüchen 1 bis 5, dadurch gekennzeichnet, dass die Elektrode von zwei zueinander senkrecht stehenden Scharen umspannt ist.

7. Graphitelektrode nach den Patentansprüchen 1 bis 6, dadurch gekennzeichnet, dass eine Schar im Grund der Gewindegänge des Schraubnippels verläuft.

8. Graphitelektrode nach den Patentansprüchen 1 bis 7, dadurch gekennzeichnet, dass eine Schar die Mantelflächen der Elektrodenabschnitte umspannt und die umwickelten Flächen mit einem oxidationsbeständigen Überzug versehen sind.

9. Graphitelektrode nach den Patentansprüchen 1 bis 8, dadurch gekennzeichnet, dass wenigstens die Elektrodenabschnitte mit Schlitzen versehen sind, die parallel zur Längsachse verlaufen.

10. Verfahren zur Herstellung einer Graphitelektrode nach den Patentansprüchen 1 bis 9, dadurch gekennzeichnet, dass in die Gewindegänge des Schraubnippels Graphitfilamentgarn unter einer Vorspannung abgelegt, Garn und Schraubnippel miteinander verklebt und das Klebemittel durch Erwärmen stabilisiert werden.

11. Verfahren zur Herstellung einer Graphitelektrode nach den Patentansprüchen 1 bis 10, dadurch gekennzeichnet, dass wenigstens die Schraubnippel gekerbt oder mit Bohrungen versehen werden, Graphitfilamentgarn unter einer Vorspannung in den Kerben oder Bohrungen abgelegt, mit dem Schraubnippel verklebt und das Klebemittel durch Erwärmen stabilisiert wird.

12. Verfahren zur Herstellung einer Graphitelektrode nach den Patentansprüchen 1 bis 11, dadurch gekennzeichnet, dass die Elektrodenabschnitte mit axialen Bohrungen versehen werden, vorgespanntes Graphitfilamentgarn in die Bohrungen eingezogen, mit den Elektrodenabschnitten verklebt und das Klebemittel thermisch stabilisiert wird.

13. Verfahren nach den Patentansprüchen 1 bis 12, dadurch gekennzeichnet, dass als Klebemittel ein härtbares Harz verwendet wird.

14. Verfahren nach den Patentansprüchen 1 bis 13, dadurch gekennzeichnet, dass das Klebemittel bei der bestimmungsgemässen Verwendung der Elektrode in einem Lichtbogenofen thermisch stabilisiert wird.

15. Verfahren nach den Patentansprüchen 1 bis 14, dadurch gekennzeichnet, dass die Mantelfläche der Elektrodenabschnitte mit Graphit filamentgarn umspannt, das Garn mit den Elektrodenabschnitten verklebt und die umspannte Fläche mit einem hochschmelzenden, oxidationsbeständigen Überzug versehen wird.

**Revendications**

1. Electrode de graphite pour four électrique à arc, avec plusieurs tronçons d'électrode reliés par des manchons filetés, caractérisée en ce qu'au moins une partie de l'électrode est entourée de filaments de graphite, et que le fil est fortement relié avec la partie de l'électrode.

2. Electrode de graphite selon la revendication 1, caractérisée en ce que le manchon fileté et les tronçons d'électrode sont entourés de fibres de graphite.

3. Electrode de graphite selon les revendications 1 et 2, caractérisée en ce que la fibre de graphite est précontrainte.

4. Electrode de graphite selon les revendications 1 à 3, caractérisée en ce que le fil est un fil constitué d'une multitude de filaments.

5. Electrode de graphite selon les revendications 1 à 4, caractérisée en ce que le titre du fil s'élève de 300 à 350 ktex.

6. Electrode de graphite selon les revendications 1 à 5, caractérisée en ce que l'électrode est entourée de deux ensembles de fibres disposés verticalement l'un avec l'autre.

7. Electrode de graphite selon les revendications 1 à 6, caractérisée en ce qu'un ensemble de fibres se déroule dans le fond du filetage du manchon fileté.

8. Electrode de graphite selon les revendications 1 à 7, caractérisée en ce qu'un ensemble de fibres entoure les surfaces du manteau des tronçons d'électrode, et que les surfaces enveloppées sont munies d'un revêtement résistant à l'oxydation.

9. Electrode de graphite selon les revendications 1 à 8, caractérisée en ce que les tronçons d'électrode sont munis au moins de fentes, qui s'étendent parallèlement à l'axe longitudinal.

10. Procédé de graphite selon les revendications 1 à 9, caractérisé en ce que, dans le filetage du manchon fileté, des filaments de graphite sont déposés, sous une précontrainte, le fil et le manchon fileté étant collés ensemble, et le moyen de collage étant stabilisé par réchauffage.

11. Procédé pour la fabrication d'une électrode de graphite selon les revendications 1 à 10, caractérisé en ce que les manchons filetés sont au moins entaillés ou munis d'alésages, les filaments de graphite étant déposés sous une précontrainte dans les entailles ou les alésages, et collés avec le manchon fileté, le moyen de collage étant stabilisé par réchauffage.

12. Procédé pour la fabrication d'une électrode de graphite selon les revendications 1 à 11, caractérisé en ce que les tronçons d'électrode sont munis d'alésages axiaux, des filaments de graphite précontraints sont introduits dans les alésages et collés avec les tronçons d'électrode, le moyen de collage étant thermiquement stabilisé.

13. Procédé selon les revendications 1 à 12, caractérisé en ce qu'une résine thermodurcissable est utilisée comme moyen de collage.

14. Procédé selon les revendications 1 à 13, caractérisé en ce que le moyen de collage est thermiquement stabilisé lors de l'utilisation de l'électrode dans les conditions d'exploitation dans un four électrique à arc.

15. Procédé selon les revendications 1 à 14, caractérisé en ce que la surface du manteau des tronçons d'électrode est entourée de filaments de graphite, le fil étant collé avec les tronçons d'électrode, et la surface entourée étant munie d'un revêtement à haut point de fusion et résistant à l'oxydation.

## Claims

1. Graphite electrode for arc furnaces with several electrode sections connected by threaded nipples, characterised in that at least one part of the electrode has graphite filament yarn wound around and the yarn is tensionally connected with the electrode part.

2. Graphite electrode according to claim 1, characterised in that threaded nipple and electrode sections have graphite fibre yarn wound around.

3. Graphite electrode according to claims 1 and 2, characterised in that the graphite fibre yarn is prestressed.

4. Graphite electrode according to claims 1 to 3, characterised in that the yarn is a multifilament yarn.

5. Graphite electrode according to claims 1 to 4, characterised in that the titre of the yarn amounts to 300 to 350 ktex.

6. Graphite electrode according to claims 1 to 5, characterised in that the electrode is wrapped around by two groups of filaments at right angles to one another.

7. Graphite electrode according to claims 1 to 6, characterised in that one group extends in the base of the thread of the threaded nipple.

8. Graphite electrode according to claims 1 to 7, characterised in that one group is wound around the outer surfaces of the electrode sections and the wrapped surfaces are provided with an oxidation resistant coating.

9. Graphite electrode according to claims 1 to 8, characterised in that at least the electrode sections are provided with slots which run parallel to the longitudinal axis.

10. Process for the production of a graphite electrode according to claims 1 to 9, characterised in that graphite filaments under a prestressing are deposited in the threads of the threaded nipple, yarn and threaded nipple are cemented to one another and the adhesive is stabilised by heating.

11. Process for the production of a graphite electrode according to claims 1 to 10, characterised in that at least the threaded nipples are notched or provided with passages, graphite filament yarn under a prestressing is deposited in the notches or passages, is cemented with the threaded nipple and the adhesive is stabilised by heating.

12. Process for the production of a graphite electrode according to claims 1 to 11, characterised in that the electrode sections are provided with axial passages, prestressed graphite filament yarn is drawn into the passages, cemented with the electrode sections and the adhesive is thermally stabilised.

13. Process according to claims 1 to 12, characterised in that a hardenable resin is used as adhesive.

14. Process according to claims 1 to 13, characterised in that the adhesive is thermally stabilised in an arc furnace in the intended use of the electrode.

15. Process according to claims 1 to 14, characterised in that the outer surface of the electrode section has graphite filament yarn wound around, the yarn is cemented with the electrode sections and the wound surface is provided with a high melting, oxidation resisting coating.

2  4

3  3

1

4

4  3

1

3  1

4  2

**Fig.1**

**Fig.2**

3

2

4

1

3

Fig.3

Fig.4

Fig.5

Fig.6